(19) **Europäisches Patentamt / European Patent Office / Office européen des brevets**

(11) **EP 1 820 265 B1**

(12) **FASCICULE DE BREVET EUROPEEN**

(45) Date de publication et mention de la délivrance du brevet:
**17.11.2010 Bulletin 2010/46**

(51) Int Cl.:
***H02P 25/08*** (2006.01)

(21) Numéro de dépôt: **05819423.4**

(86) Numéro de dépôt international:
**PCT/FR2005/050984**

(22) Date de dépôt: **24.11.2005**

(87) Numéro de publication internationale:
**WO 2006/059028 (08.06.2006 Gazette 2006/23)**

(54) **PROCEDE DE COMMANDE D'UN ENSEMBLE D'ENTRAINEMENT DE VEHICULE A MOTEUR THERMIQUE**

VERFAHREN ZUR KONTROLLE EINER ANORDNUNG ZUR STEUERUNG EINES WÄRMEKRAFTMOTORFAHRZEUGS

METHOD FOR CONTROLLING A HEAT ENGINE VEHICLE DRIVING ASSEMBLY

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **30.11.2004 FR 0412671**

(43) Date de publication de la demande:
**22.08.2007 Bulletin 2007/34**

(73) Titulaire: **Renault SAS**
**92100 Boulogne Billancourt (FR)**

(72) Inventeur: **LOUDOT, Serge**
**F-91190 VILLIERS LE BACLE (FR)**

(74) Mandataire: **Religieux, Vincent**
**Renault Technocentre**
**Sce 00267 - TCR GRA 2 36**
**1, avenue du Golf**
**78288 Guyancourt Cedex (FR)**

(56) Documents cités:
**EP-A- 0 534 761     US-A- 4 707 650**

- **INDERKA R B ET AL: "DITC- direct instantaneous torque control of switched reluctance drives" CONFERENCE RECORD OF THE 2002 IEEE INDUSTRY APPLICATIONS CONFERENCE. 37TH IAS ANNUAL MEETING . PITTSBURGH, PA, OCT. 13 - 18, 2002, CONFERENCE RECORD OF THE IEEE INDUSTRY APPLICATIONS CONFERENCE. IAS ANNUAL MEETING, NEW YORK, NY : IEEE, US, vol. 1 OF 4. CONF. 37, 13 octobre 2002 (2002-10-13), pages 1605-1609, XP010610094 ISBN: 0-7803-7420-7**
- **STEPHENSON J M BLAKE R J: "THE CHARACTERISTICS, DESIGN AND APPLICATION OF SWITCHED RELUCTANCE MOTORS AND DRIVES" PCIM EUROPE PROCEEDINGS OF THE INTERNATIONAL INTELLIGENT MOTION CONFERENCE, vol. 5, 21 juin 1993 (1993-06-21), pages 1-68, XP002956735**

## Description

L'invention concerne les ensembles d'entraînement de véhicule comprenant un moteur thermique, ainsi que les procédés de commande de tels ensembles.

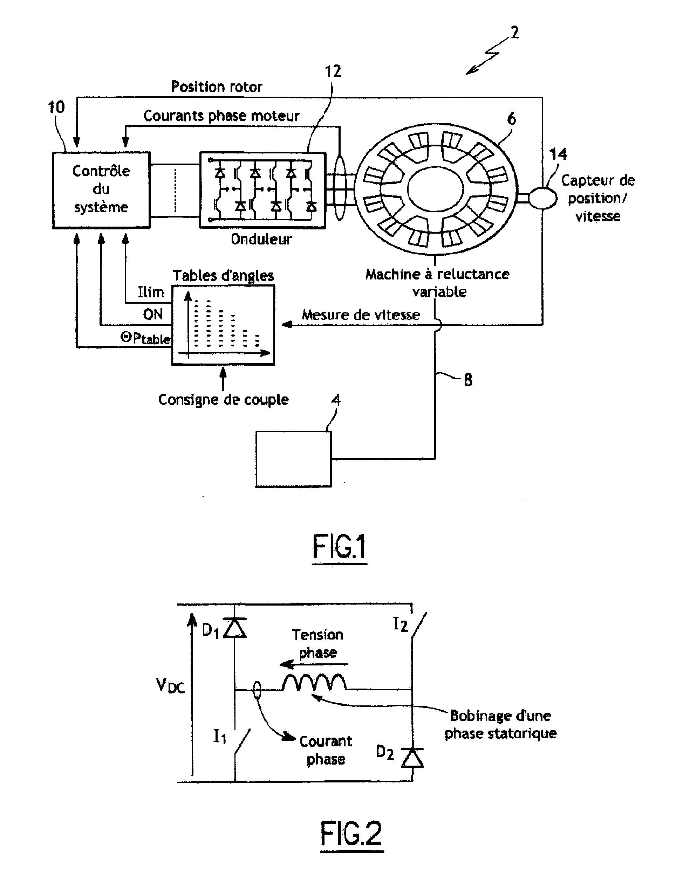

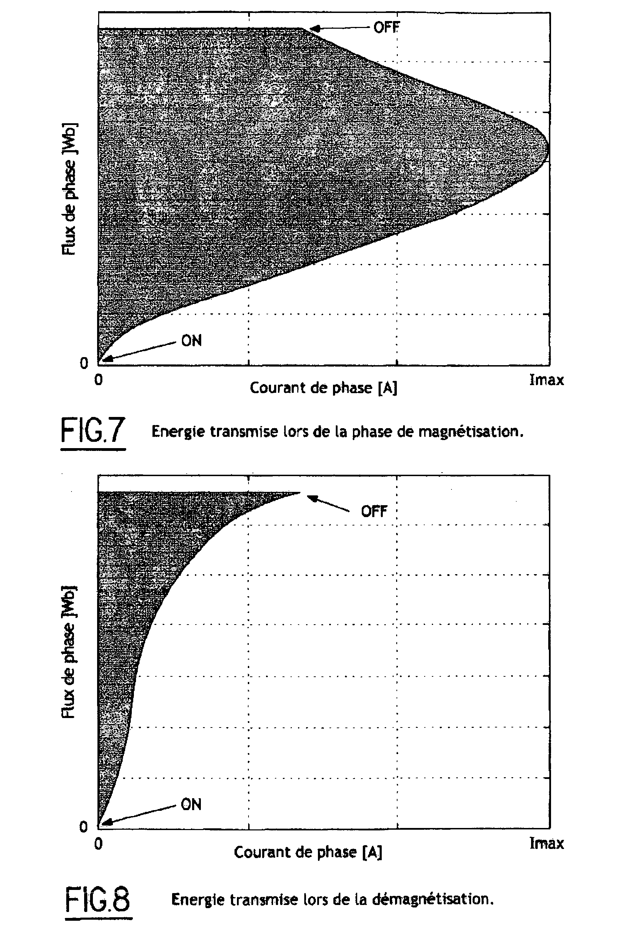

On a représenté à la figure 1 un exemple de réalisation classique d'un tel ensemble. L'ensemble 2 constitue un ensemble d'entraînement de véhicule automobile. Cet ensemble comprend de façon connue en soi un moteur thermique 4, tel qu'un moteur à essence ou un moteur diesel. Il comprend un alterno-démarreur formé par une machine 6 à réluctance variable d'un type connu en soi. Cette machine 6 est reliée mécaniquement au moteur 4 pour fournir un couple à ce dernier, notamment en vue de le faire démarrer lorsqu'il est à l'arrêt. Cette liaison mécanique d'un type connu en soi porte la référence 8 sur la figure 8. L'ensemble comporte une unité de commande 10 comportant des moyens informatiques classiques lui permettant de commander les différents organes de l'ensemble comme on le verra ci-après. L'ensemble 2 comporte également un onduleur 12 au moyen duquel l'unité de commande 10 pilote le fonctionnement de la machine 6.

L'ensemble 2 comporte par ailleurs un capteur de position et/ou un capteur de vitesse 14 permettant à l'unité 10 de connaître à chaque instant une mesure de la vitesse de la machine 6.

On a représenté sur la figure 2 une topologie d'onduleur classique pour la commande de la phase moteur. Sur cette figure 2, $V_{DC}$ représente la tension continue d'alimentation de l'onduleur, $I_1$ et $I_2$ deux interrupteurs électriques commutables à l'ouverture et à la fermeture et $D_1$ et $D_2$ deux diodes.

Un procédé de commande d'un tel ensemble d'entraînement installé sur un véhicule (comportant comme on l'a vu une machine à réluctance associé à un onduleur) est généralement utilisé pour contrôler le couple délivré par cet ensemble d'entraînement.

Toutefois, dans le cadre d'une production industrielle en grande série, il est indispensable de garantir la plus faible variabilité possible du couple fournit par deux ensembles différents, toutes autres choses étant par ailleurs égales (commande, tension d'alimentation, etc.).

Or le couple délivré par une machine à réluctance commutée dépend fortement des dispersions géométriques de la machine, des dispersions magnétiques des tôles, ou encore des dispersions électriques des fils.

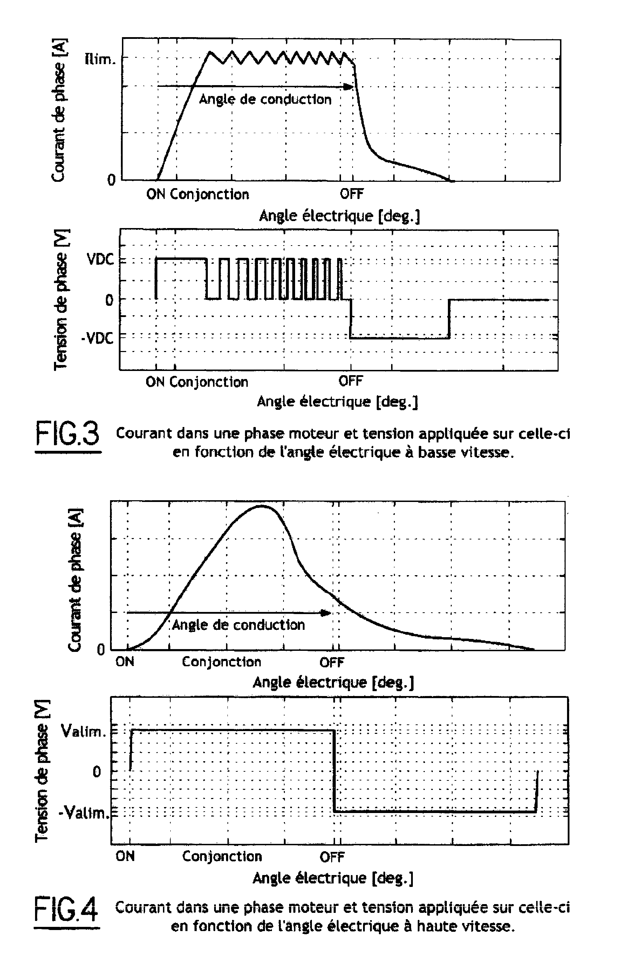

On a illustré sur les figures 3 et 4 l'allure des courants et des tensions de phase tels que représentés sur la figure 2, respectivement à basse vitesse et à haute vitesse, en fonction de l'angle électrique du rotor (cet angle étant nul lorsque la dent du rotor est en conjonction avec la dent du stator).

On sait qu'une machine à réluctance variable telle que la machine 6 de la figure 1 se pilote essentiellement par trois variables :

- les angles de début de magnétisation ON et de fin de magnétisation OFF ;
- et, dans les basses vitesses, le courant de phase crête qui est régulé ($I_{lim}$);

La magnétisation de la phase de la machine se fait dans l'intervalle de temps constitué par l'angle de conduction $\Theta p = OFF - ON$.

Afin de piloter la machine à réluctance variable, on utilise comme paramètres d'entrée de l'unité de commande 10 les paramètres de commande (ON, $\Theta p$, $I_{lim}$) à basse vitesse et (ON, Op) à haute vitesse ; ces paramètres étant optimisés pour chaque point de fonctionnement couple-vitesse.

Comme illustré à la figure 1, et de façon connue en soi, la machine 6 est piloté par l'unité de commande 10 au moyens de loi de commande issues de tables prédéfinies qui donnent les angles d'amorçage (ON), de conduction ($\Theta p_{table}$) et le courant ($I_{lim}$) en fonction de la vitesse de l'alternateur obtenue à partir du capteur 14. Ces grandeurs sont également déterminées en fonction du couple à délivrer par la liaison 8 au moteur 4. Eventuellement, on pourra également prendre en compte la tension d'alimentation continue $V_{DC}$ de l'onduleur si celle-ci est susceptible de varier, ainsi que d'autres paramètres tels que la température des bobinages par exemple.

A chaque période électrique, un pointeur est défini en fonction de ces paramètres externes (vitesse, tension d'alimentation, température des bobinages, etc.) et de la consigne du couple. Ce pointeur adresse alors les tables qui fournissent (éventuellement après extrapolation) les paramètres de commande (ON, $\Theta p$, $I_{lim}$) à basse vitesse et (ON, Op) à haute vitesse.

Toutefois, cette loi de commande classique en boucle ouverte selon laquelle les ordres de commande appliqués ne dépendent que de la position, de la vitesse, de la consigne de couple, et du courant (uniquement pris en compte à basse vitesse lorsqu'il est régulé à $I_{lim}$) n'est pas satisfaisante : le couple effectivement délivré reste totalement dépendant des dispersions (mécaniques, magnétiques, électriques, etc.) de la machine.

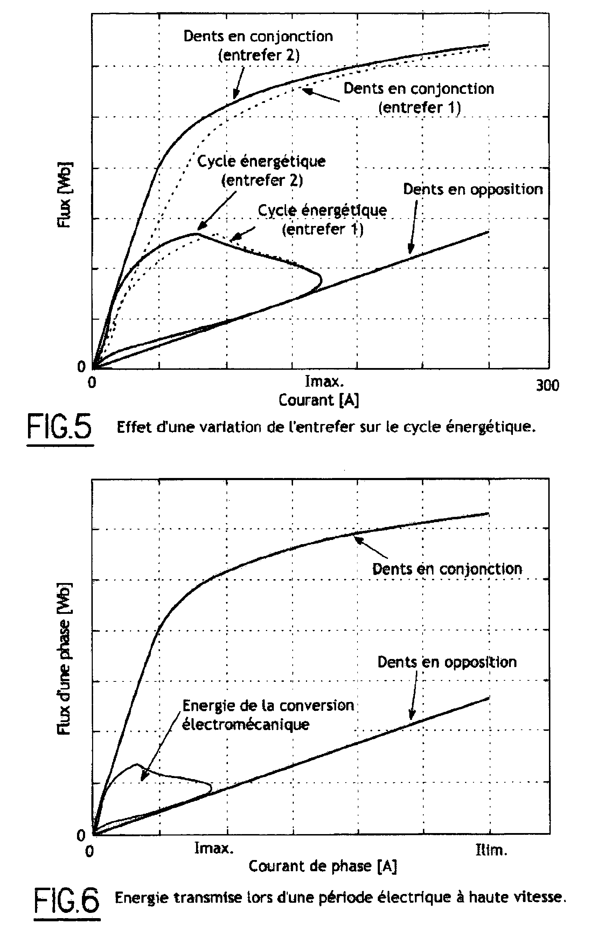

En référence à la figure 5, on a ainsi représenté les effets de la variabilité de l'entrefer entre rotor et stator sur le couple électromagnétique délivré (ie. la surface du cycle énergétique) lorsque la commande classique est utilisée.

Il est à noter que les effets de la variation d'autres paramètres (dimensions géométriques, paramètres électriques ou magnétiques) sont relativement similaires.

Sur la figure 5, l'entrefer 1 est supérieur à l'entrefer 2 ce qui engendre une différence des courbes de saturation lorsqu'une dent rotorique est en conjonction avec une dent statorique de la phase considérée. En opposition, l'effet de la variation de l'entrefer est négligeable.

On constate sur cette figure 5 que, pour une même commande, le couple électrique délivré est différent suivant l'entrefer de la machine.

Afin d'améliorer le niveau de qualité et d'assurer une prestation identique d'une ensemble à l'autre, une première solution consiste à réduire les diverses tolérances de la machine produite en série (notamment les tolérances mécaniques, magnétiques et électriques). Cette solution s'avère toutefois coûteuse, notamment en terme de processus de fabrication et de matière première.

L'article « DITC-direct instantaneous torque control of switched reluctance drives » de Inderka et al. présente un contrôleur à hystérésis qui génère les signaux de commutation des phases d'une machine à reluctance variable de manière à réguler le couple délivré.

On connaît de US 4,707,650 un système de contrôle en boucle fermée d'une machine à reluctance variable mettant en oeuvre une boucle de vitesse ou une boucle de couple pour déterminer les paramètres de commande (ON, Θp, I$_{lim}$) utilisés comme consignes de pilotage de la machine

Un but de l'invention est de proposer une solution qui permette de compenser les dispersions inhérentes à la machine lors du fonctionnement de celle-ci, sans pour autant venir augmenter le coût d'une telle machine.

A cet effet, l'invention propose, selon un premier aspect, un procédé de commande d'un ensemble d'entraînement de véhicule dans lequel on applique à une machine à réluctance variable une valeur de consigne d'angle de conduction, **caractérisé en ce que** l'on régule ladite valeur de consigne d'angle de conduction à l'aide d'un angle de conduction supplémentaire déterminé en fonction d'une mesure de contrôle du couple délivré par l'ensemble d'entraînement au moteur.

Certains aspects préférés, mais non limitatifs, de ce procédé sont les suivants :

- la mesure de contrôle du couple est réalisée en calculant l'écart entre le couple de consigne et une valeur d'estimation du couple ;
- l'écart est traité par un correcteur pourvu d'une loi de correction adaptée pour déterminer l'angle de conduction supplémentaire destiné à être appliqué à l'alternateur pour réguler ladite valeur de consigne d'angle de conduction et rendre ledit écart nul ;
- la mesure de contrôle de couple est réalisée à l'aide d'une estimation du flux de phase ;
- le flux est estimé par intégration de la tension appliquée à cette phase lors d'une période électrique selon $\Phi_{estimé} = \int (U_{phase} - R_{phase} \cdot I_{phase})dt$, où R$_{phase}$ désigne la résistance du bobinage statorique, U$_{phase}$ la tension de phase et I$_{phase}$ le courant de phase ;
- on réalise une mesure directe de la tension de phase ;
- les ordres de commande de début et de fin de magnétisation et le courant de phase sont utilisés pour déterminer la tension de phase, celle-ci étant égale à la tension d'alimentation V$_{DC}$ pendant la durée de la magnétisation, à -V$_{DC}$ pendant la durée de la démagnétisation, et à zéro durant les phases de roue libre ou lorsque le courant de phase est nul ;
- l'estimation du flux est périodiquement mise à jour à l'aide d'une valeur du flux mesurée ;
- l'estimation du flux est recalée à chaque période électrique, lors du passage en opposition, à la valeur L$_0 \cdot$I$_{phase}$ où L$_0$ est l'inductance en opposition et I$_{phase}$ le courant mesuré à l'instant du passage en opposition ;
- le couple est estimé, à l'aide de l'estimation du flux, en calculant la différence entre l'énergie transmise lors de la phase de magnétisation et l'énergie renvoyée lors de la phase de démagnétisation ;
- la loi de correction est de type proportionnel-intégral ;
- on applique à la machine sur une période électrique, une valeur de consigne d'angle de conduction calculée à partir de l'estimation du flux calculée à la période électrique précédente ;
- la valeur de consigne d'angle de conduction est égale à la somme de l'angle de conduction supplémentaire et d'une valeur d'angle de conduction fournie par une table d'angles adressée par la valeur du couple de consigne ;
- ladite valeur de consigne d'angle de conduction est égale à la somme de l'angle de conduction supplémentaire et d'une valeur d'angle de conduction fournie par une table d'angles adressée par la valeur du couple de consigne ;
- la machine à reluctance variable fonctionne en mode discontinu ou en mode courant continu, ladite valeur d'angle de conduction fournie par la table d'angles étant égale à 180° lors du fonctionnement en mode courant continu.

Selon un deuxième aspect, l'invention concerne un ensemble d'entraînement pour véhicule comprenant :

- un moteur thermique ;
- une machine à réluctance variable ;
- et une unité de commande adaptée pour appliquer à la machine une valeur de consigne d'angle de conduction,

**caractérisé en ce que** l'unité de commande est en outre adaptée pour réguler ladite valeur de consigne d'angle de conduction à l'aide d'un angle de conduction supplémentaire déterminé en fonction d'une mesure de contrôle du couple délivré par l'ensemble d'entraînement.

Certains aspects préférés, mais non limitatifs, de cet ensemble sont les suivants :

- il comporte des moyens appropriés pour calculer une estimation du couple et réaliser une mesure de contrôle du couple en mesurant l'écart entre le couple de consigne et ladite estimation du couple, ainsi que des moyens pour ajuster la valeur de consigne d'angle de conduction en fonction de ladite mesure de contrôle du couple ;

- il comporte des moyens pour calculer une estimation du flux ainsi que des moyens pour calculer une estimation du couple à partir de ladite estimation du flux ;
- une table d'angles étant adressée par la valeur de consigne du couple pour fournir une valeur d'angle de conduction, l'unité de commande est adaptée pour appliquer à la machine une valeur de consigne d'angle de conduction égale à la somme de l'angle de conduction supplémentaire et de la valeur d'angle de conduction fournie par la table d'angles.

Enfin, l'invention prévoit également un véhicule comportant un ensemble d'entraînement selon le deuxième aspect de l'invention.

D'autres aspects, buts et avantages de l'invention apparaîtront mieux à la lecture de la description détaillée suivante de formes de réalisation préférées de celle-ci, donnée à titre d'exemple non limitatif et faite en référence aux dessins annexés.

Sur les dessins, outre les figures 1 à 5 déjà présentées plus haut :

- la figure 6 représente l'énergie transmise lors d'une période électrique à haute vitesse ;
- les figures 7 et 8 représentent respectivement l'énergie transmise lors de la phase de magnétisation et lors de la phase de démagnétisation
- la figure 9 représente un mode de réalisation possible du système d'entraînement selon l'invention ;
- la figure 10 donne des exemples de séquencement du calcul de la régulation du couple ;
- la figure 11 représente l'évolution du cycle énergétique sur plusieurs périodes électriques lorsque la valeur de consigne d'angle de conduction est régulée comme cela est proposé dans le cadre de l'invention ;
- la figure 12 représente un mode de réalisation possible d'un estimateur du flux de phase.

L'invention vise à compenser les dispersions inhérentes à la machine et à ses constituants afin que le couple électromagnétique délivré soit le moins affecté possible par ces dispersions.

L'invention propose à cet effet d'utiliser un observateur de couple électromagnétique. Cet observateur permet plus précisément d'estimer le couple délivré. Une loi de régulation est alors définie qui permet de corriger les écarts entre le couple de consigne et le couple estimé. Cette correction se traduit par le calcul d'un angle de conduction supplémentaire qui est utilisé pour réguler la valeur de consigne de l'angle de conduction Op.

L'estimation du couple électromagnétique est réalisée à partir d'une estimation du flux dans une phase.

L'estimation du flux d'une phase se fait par l'intégration de la tension appliquée à cette phase : $\Phi_{estimé}$

$= \int(U_{phase} - R_{phase} \cdot I_{phase})dt$, où $R_{phase}$ désigne la résistance du bobinage statorique, $U_{phase}$ et $I_{phase}$ désignent respectivement la tension et le courant de phase (comme cela est indiqué sur les figures 2, 3 et 4).

La tension de phase $U_{phase}$ correspond à la tension de l'alimentation $V_{DC}$ pendant la durée de magnétisation, à la tension $-V_{DC}$ durant la phase de démagnétisation, et à 0 durant les phases de roue libres ou lorsque le courant est nul.

Afin de calculer la tension de phase $U_{phase}$, on utilise soit une mesure directe la tension de chaque bobinage statorique, soit encore le courant de phase $I_{phase}$, la tension d'alimentation continue $V_{DC}$ ainsi que les signaux de commande ON et OFF. En effet, les ordres de commande de début et de fin de magnétisation et la mesure du courant de phase permettent de connaître le signe de la tension appliquée sur le bobinage (positif, négatif ou nul) remplaçant ainsi une mesure directe de la tension de chaque bobinage statorique.

La valeur du courant de phase $I_{phase}$ est obtenue, de manière connue en soi, comme cela est représenté sur la figure 1, par mesure électrique en sortie de l'onduleur 12.

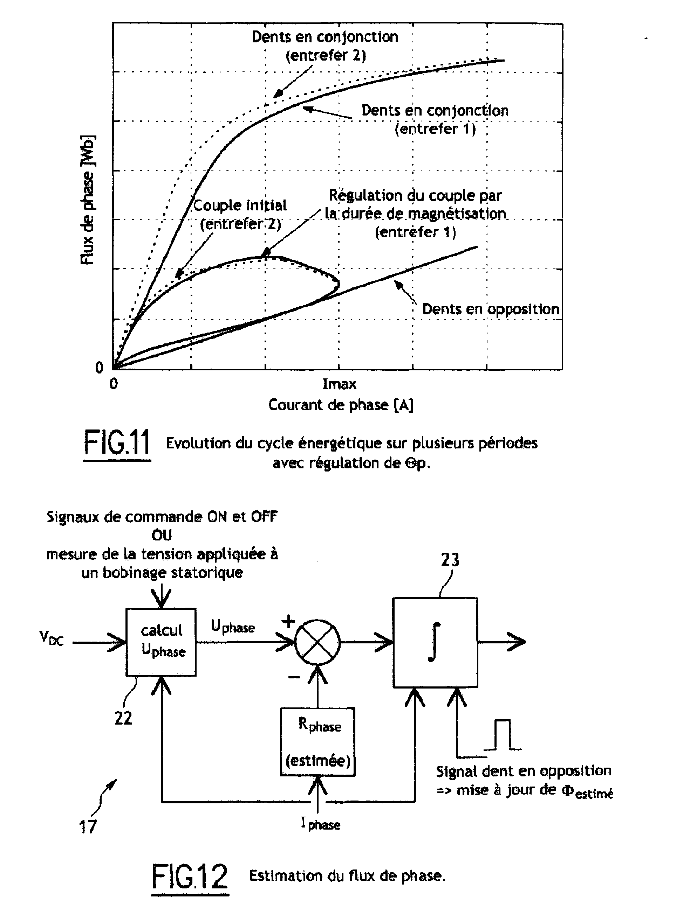

On a représenté sur la figure 12 un mode de réalisation possible d'un estimateur 17 du flux de phase.

L'estimateur 17 comporte ainsi des moyens 22 adaptés pour calculer la tension de phase $U_{phase}$. Ces moyens 22 prennent comme paramètres d'entrée soit une mesure directe la tension de chaque bobinage statorique, soit encore le courant de phase $I_{phase}$, la tension d'alimentation $V_{DC}$ ainsi que les signaux de commande ON et OFF.

La valeur du courant de phase $I_{phase}$ est obtenue, de manière connue en soi, comme cela est représenté sur la figure 1, par mesure électrique en sortie de l'onduleur 12.

Un intégrateur 23 permet de calculer l'estimation du flux selon l'équation $\Phi_{estimé} = \int(U_{phase} - R_{phase} \cdot I_{phase})dt$ présentée ci-dessus.

En pratique cependant, les mesures présentent toujours des erreurs et surtout, la résistance du bobinage d'une phase $R_{phase}$ est fortement variable (notamment avec la température). Selon un mode de réalisation avantageux de l'estimateur 17, on recale à chaque période électrique le flux estimé en sortie de l'intégrateur 23.

Selon un mode de réalisation possible de l'invention, ce recalage est réalisé lors du passage en opposition car à ce moment l'inductance de la phase est la plus constante (donc indépendante du courant de phase) ce qui minimise les erreurs et simplifie l'estimation du flux. Le flux estimé lors du passage en opposition $\Phi estimé \ |opposition$ est donc tel que $\Phi estimé \ |opposition = Lo.I_{phase}$, où Lo est l'inductance en opposition (qui peut être mesurée rotor bloqué en opposition par exemple) et $I_{phase}$ le courant de phase mesuré à cet instant. La sortie de l'intégrateur 23 est ainsi forcée à chaque période électrique, lors du passage en opposition, par la mise à jour de la valeur du flux $(Lo.I_{phase})$.

Le couple délivré par la machine à vitesse constante est proportionnel à l'énergie transmise par une phase du moteur. Il est donc proportionnel à la surface de la courbe illustrée à la figure 6 qui montre l'évolution du flux associé à une phase de l'alternateur en fonction du courant de phase, pour une machine fonctionnant à haute vitesse. L'énergie issue de la conversion électromécanique est ainsi caractérisée par la surface (ou cycle énergétique) qui est délimitée par la trajectoire parcourue par le flux de phase et le courant de phase au cours d'une période électrique.

Connaissant l'évolution du flux au cours d'une période, il devient alors possible d'estimer le couple électromagnétique transmis en calculant l'énergie transmise tel que représentée graphiquement sur la figure 6.

Connaissant le flux, le couple peut effectivement être estimé par la différence entre l'énergie Emag transmise lors de la phase de magnétisation et l'énergie Edemag renvoyée lors de la phase de démagnétisation.

L'énergie transmise lors de la magnétisation vaut :

$$Emag = \int_{ON}^{OFF} I_{phase} d\phi \,,$$

où $\Phi$ est le flux de phase estimé. Il faut noter que le flux est strictement croissant durant cette phase ; il atteint son maximum à la fin de la magnétisation (OFF).

Lors de la démagnétisation, l'énergie renvoyée vaut

$$Edemag = \int_{OFF}^{ON} I_{phase} d\phi \,.$$

Dans cette phase, le flux est strictement décroissant.

Algébriquement, Emag et Edemag sont de signe opposés. La somme de ces deux grandeurs (ou la différence de leurs valeurs absolues) représente l'énergie convertie et est donc une image du couple électromagnétique de la machine.

Sur une période électrique, le couple électromagnétique moyen délivré est proportionnel à la surface du cycle énergétique représenté par la figure 6.

Connaissant le flux à chaque instant grâce à l'estimateur 17 de flux précédemment décrit, et disposant d'une mesure du courant de phase ainsi qu'une image de la tension appliquée au bobinage (qui comme cela a déjà été mentionné peut être mesurée directement ou estimée via la commande et la valeur du courant), il est possible d'avoir une image du couple électromagnétique par le calcul direct de l'énergie représentée par cette surface.

Le calcul de cette énergie peut ainsi s'opérer en deux phases.

Au cours d'une première phase, on calcule l'énergie échangée lors de la phase de magnétisation

$$Emag = \int_{ON}^{OFF} I_{phase} d\phi \,,$$

telle que représenté par la surface de la figure 7.

Au cours d'une deuxième phase, on calcule l'énergie échangée lors de la phase de démagnétisation

$$Edemag = \int_{OFF}^{ON} I_{phase} d\phi \,,$$

telle que représentée par la surface de la figure 8.

L'énergie convertie correspond à la différence des deux surfaces représentées aux figures 7 et 8, ou encore à la somme algébrique des valeurs Emag et Edemag (celles-ci étant de signes opposés).

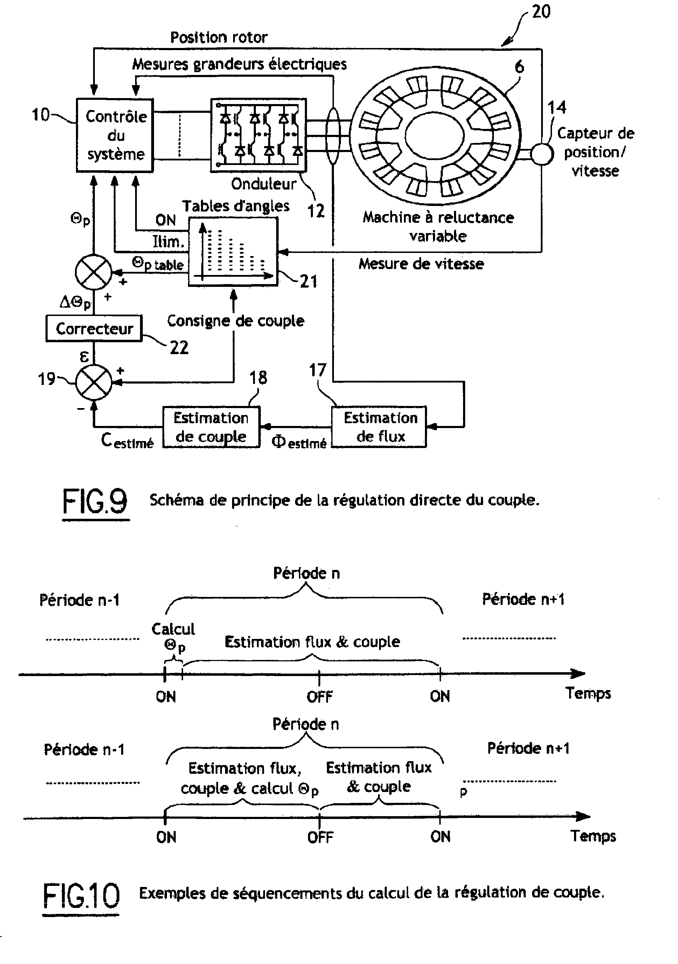

La figure 9 représente un mode de réalisation possible d'un ensemble 20 selon l'invention mettant en oeuvre une régulation visant à compenser l'effet des dispersions, notamment les dispersions mécaniques (comme cela a été discuté en relation avec une variation de l'entrefer au regard de la figure 5), magnétiques ou électriques.

Sur cette figure 9, les éléments du même type que ceux de la figure 1 portent les mêmes références numériques.

Partant du schéma de régulation classique de la figure 1, l'ensemble 20 de la figure 10 selon un mode de réalisation possible de l'invention comporte des moyens 17 d'estimation du flux suivies de moyens 18 d'estimation du couple.

Le couple estimé $C_{estimé}$ à l'aide des moyens 18 est comparé à l'aide d'un comparateur 19 au couple de consigne $C_{consigne}$ qui est également fourni à la table d'angles 21. On dispose en sortie du comparateur 19 d'une mesure d'écart entre le couple estimé $C_{estimé}$ et le couple de consigne $C_{consigne}$ sous la forme d'une erreur $\varepsilon$.

L'erreur $\varepsilon$ est traitée par un correcteur 22 pourvu d'une loi adaptée (proportionnel - intégral par exemple) pour déterminer un angle de conduction supplémentaire $\Delta\Theta p$ permettant de réguler la valeur de consigne Op d'angle de conduction appliquée à l'alternateur de manière à ce que l'erreur $\varepsilon$ soit rendue nulle (c'est à dire de manière à ce que le couple estimé soit alors égal au couple de consigne).

La valeur de consigne Op d'angle de conduction est ainsi égale à la somme entre la valeur de consigne $\Theta p_{table}$ issue des tables d'angles et ledit angle de conduction supplémentaire $\Delta\Theta p$: $\Theta p = \Theta p_{table} + \Delta\Theta p$.

Suivant le schéma de la figure 9, l'angle de conduction Op est piloté de manière à permettre le contrôle direct du couple de la machine.

Les écarts de couple dus aux diverses dispersions sont ainsi compensés ; pour un même point de fonctionnement, l'angle de conduction Op appliqué à l'alternateur sera ainsi différent entre deux machines du même type.

L'estimation du couple requiert une période électrique. Ainsi le couple requis ne s'établit (et les dispersions ne sont alors compensées) qu'après plusieurs périodes électriques. Dans le cadre de la commande discutée précédemment au regard de la figure 9, on applique lors de la première période électrique, ou après un changement de couple de consigne, une valeur de consigne d'angle de conduction Op égale à l'angle $\Theta p_{table}$

fourni par la table d'angles 21 (c'est-à-dire que l'on initialise l'erreur ε à zéro).

L'angle de conduction supplémentaire ΔΘp est ensuite calculé et vient modifier, si cela s'avère nécessaire, l'angle de conduction appliqué à la machine au cours de la seconde période (ou encore au cours de la période suivant celle où est intervenu le changement de couple de consigne).

Cette procédure est répétée tant que le couple de consigne ne varie pas significativement, en particulier en regard de la résolution de la table d'angles.

Au cours d'une période électrique, plusieurs tâches doivent ainsi être séquencées.

L'instant de début de magnétisation ON (ie. l'angle ON) reste inchangé. Au cours de la période de magnétisation, la consigne donnant la valeur de l'angle de conduction Op (devant être appliquée jusqu'à l'instant de fin de magnétisation OFF) est calculée.

Selon une première option, le calcul de la commande Op peut être réalisé en parallèle à l'estimation du couple (et donc du flux) durant le début de magnétisation. Le chronogramme inférieur de la figure 10 illustre cette première option.

Selon une deuxième option, le début de la période de magnétisation peut être consacré au calcul de la commande Op, l'estimation de couple commençant ensuite. Une extrapolation linéaire est alors réalisée sur cette période de manière à estimer le couple et de flux. Le chronogramme supérieur de la figure 10 illustre cette option.

On a représenté sur la figure 11 un exemple de l'effet de la régulation du couple en mode discontinu. Considérant une machine (pourvue d'un entrefer 1) dont le couple est inférieur (surface du cycle énergétique inférieure), à commande égale, à une machine de référence (celle pourvue de l'entrefer 2) comme cela est illustré sur la figure 5.

La régulation de la valeur de consigne de l'angle de conduction Op permet de compenser les dispersions (ici l'épaisseur de l'entrefer) en obtenant le couple de référence en sortie. L'angle de conduction augmente sur plusieurs périodes jusqu'à ce que le cycle énergétique ait une surface équivalente (ie. un couple identique) à celui de l'alternateur pourvu de l'entrefer 2 initial. Il faut noter que les cycles énergétiques ne sont pas équivalents ; seule leur surface (et donc le couple) est identique.

Dans le cadre de l'invention, l'angle de conduction Op est régulé comme indiqué précédemment aussi bien en mode discontinu qu'en mode courant continu.

En mode discontinu, un tel pilotage permet de compenser les dispersions entre machine du même type.

En mode courant continu, un tel pilotage permet de stabiliser le couple délivré. Cela est particulièrement intéressant dans la mesure où le mode courant continu, s'il permet un gain de couple à haute vitesse, est généralement instable.

Dans le cadre de l'invention, le passage du mode discontinu au mode courant continu se fait donc naturellement, le couple étant en permanence régulé avec la même loi de commande.

Par ailleurs, les diverses dispersions sont en permanence compensées (que l'on soit en mode continu ou discontinu). Ainsi, lorsque la table donne un angle de conduction Θp$_{table}$ de 180°, deux machines d'un même lot pourront être, pour un même couple en sortie, et selon les dispersions, l'une en mode courant continu et l'autre en mode discontinu.

On mentionne ici que la table d'angles est adressable sur toute la plage de couple (mode discontinu et continu). Dans la zone (haute vitesse et fort couple) atteignable avec le mode courant continu, la table fournit une consigne Θp$_{table}$ =180° ; la loi de contrôle du couple régulant ensuite l'angle de conduction Op appliqué à l'alternateur de manière à stabiliser le mode courant continu d'une part, et à fournir le couple de consigne d'autre part.

**Revendications**

1. Procédé de commande d'un ensemble d'entraînement de véhicule dans lequel on applique à une machine à réluctance variable une consigne (Θp$_{table}$) d'angle de conduction fournie par une table d'angles adressée par la valeur du couple de consigne, **caractérisé en ce que** l'on détermine, à partir de l'écart (ε) entre un couple de consigne devant être délivré par l'ensemble d'entraînement et une estimation dudit couple, un angle de conduction supplémentaire (ΔΘp) destiné à être appliqué à la machine en sus de la consigne (Θp$_{table}$) d'angle de conduction pour rendre l'écart nul.

2. Procédé selon la revendication précédente, **caractérisé en ce que** l'on estime le couple délivré par l'ensemble d'entraînement à l'aide d'une estimation du flux de phase.

3. Procédé selon la revendication précédente, **caractérisé en ce que** le flux est estimé est estimé par intégration de la tension appliquée à cette phase lors d'une période électrique selon Φ*estimé* = $\int (U_{phase} - R_{phase} \cdot I_{phase}) dt,$ où R$_{phase}$ désigne la résistance du bobinage statorique, U$_{phase}$ la tension de phase et I$_{phase}$ le courant de phase.

4. Procédé selon la revendication précédente, **caractérisé en ce qu'**on l'on réalise une mesure directe de la tension de phase.

5. Procédé selon la revendication 3, **caractérisé en ce que** les ordres de commande et le courant de phase sont utilisés pour déterminer la tension de phase, celle-ci étant égale à la tension d'alimentation V$_{DC}$ pendant la durée de la magnétisation, à -V$_{DC}$ pendant la durée de la démagnétisation, et à zéro durant les phases de roue libre ou lorsque le courant de phase est nul.

6. Procédé selon l'une des revendications 2 à 5, **caractérisé en ce que** l'estimation du flux est périodiquement mise à jour à l'aide d'une valeur du flux mesurée.

7. Procédé selon la revendication précédente, **caractérisé en ce que** l'estimation du flux est recalée à chaque période électrique, lors du passage en opposition à la valeur $L_0 \cdot I_{phase}$ où $L_0$ est l'inductance en opposition et $I_{phase}$ le courant mesuré à l'instant du passage en opposition.

8. Procédé selon l'une quelconque des revendications 2 à 7, **caractérisé en ce que** le couple est estimé, à l'aide de l'estimation du flux, en calculant la différence entre l'énergie transmise lors de la phase de magnétisation et l'énergie renvoyée lors de la phase de démagnétisation.

9. Procédé selon l'une quelconque des revendications 1 à 8, **caractérisé en ce que** ledit écart est traité pour déterminer l'angle de correction supplémentaire par une loi de correction de type proportionnel-intégral.

10. Procédé selon l'une quelconque des revendications 2 à 9, **caractérisé en ce qu'**on applique à l'alternateur sur un période électrique, une valeur de consigne d'angle de conduction calculée à partir de l'estimation du flux calculée à la période électrique précédente.

11. Procédé selon la revendication précédente, **caractérisé en ce que** la valeur consigne d'angle de conduction lors de la première période est imposée à une valeur prédéterminée, telle que la valeur d'angle de conduction ($\Theta p_{table}$) fournie par une table d'angles adressée par la valeur du couple de consigne.

12. Procédé selon l'une quelconque des revendications 1 à 11, **caractérisé en ce que** ladite valeur de consigne ($\Theta p$) d'angle de conduction est égale à la somme de l'angle de conduction supplémentaire ($\Delta \Theta p$) et d'une valeur d'angle de conduction ($\Theta p_{table}$) fournie par une table d'angles adressée par la valeur du couple de consigne.

13. Procédé de commande selon la revendication précédente, **caractérisé en ce que** l'alternateur fonctionne en mode discontinu ou en mode courant continu, ladite valeur d'angle de conduction ($\Theta p_{table}$) fournie par la table d'angles étant égale à 180° lors du fonctionnement en mode courant continu.

14. Ensemble (20) d'entraînement pour véhicule comprenant :

- un moteur thermique (20) ;
- un alternateur (6) à réluctance variable pour entraîner le moteur ;
- une unité de commande (10) adaptée pour appliquer à l'alternateur une consigne ($\Theta p_{table}$) d'angle de conduction fournie par une table d'angles adressée par la valeur du couple de consigne, et
- des moyens (17, 18, 19) pour contrôler le couple délivré par l'ensemble d'entraînement au moteur en calculant l'écart entre un couple de consigne et une estimation dudit couple

**caractérisé en ce que** à partir dudit écart l'unité de commande est en outre adaptée pour déterminer un angle de conduction supplémentaire ($\Delta \Theta p$) destiné à être appliqué à l'alternateur en sus de ladite consigne ($\Theta p_{table}$) d'angle de conduction pour rendre ledit écart nul.

15. Ensemble selon la revendication précédente, **caractérisé en ce qu'**il comporte des moyens (17) adaptés pour calculer une estimation du flux ainsi que des moyens (18) adaptés pour calculer une estimation du couple à partir de ladite estimation du flux.

16. Ensemble selon l'une quelconque des revendications 14 à 15 dans lequel une table d'angles est adressée par la valeur de consigne du couple pour fournir ladite consigne d'angle de conduction ($\Theta p_{table}$) en sus de laquelle l'angle de conduction supplémentaire est appliqué à l'alternateur.

17. Véhicule **caractérisé en ce qu'**il comporte un ensemble selon l'une quelconque des revendications 14 à 16.

**Claims**

1. Control method for a vehicle drive assembly in which a conduction angle set point ($\Theta p_{table}$) supplied by an angle table addressed by the value of the set point torque is applied to a variable reluctance machine, **characterized in that** an additional conduction angle ($\Delta \Theta p$) intended to be applied to the machine in addition to the conduction angle set point ($\Theta p_{table}$) is determined, from the difference ($\varepsilon$) between a set point torque having to be delivered by the drive assembly and an estimation of said torque, to render the difference zero.

2. Method according to the preceding claim, **characterized in that** the torque delivered by the drive assembly is estimated using an estimation of the phase flux.

3. Method according to the preceding claim, **characterized in that** the flux is estimated by integrating the voltage applied to this phase in an electrical period according to $\Phi estimated = \int(U_{phase} - R_{phase} \cdot I_{phase})dt$, where $R_{phase}$ designates the resistance of the stator winding, $U_{phase}$ the phase voltage and $I_{phase}$ the phase current.

4. Method according to the preceding claim, **characterized in that** a direct measurement of the phase voltage is carried out.

5. Method according to Claim 3, **characterized in that** the control instructions and the phase current are used to determine the phase voltage, the latter being equal to the power supply voltage $V_{DC}$ during the magnetization time, to $-V_{DC}$ during the demagnetization time, and to zero during the freewheeling phases or when the phase current is zero.

6. Method according to one of Claims 2 to 5, **characterized in that** the flux estimation is periodically updated using a measured flux value.

7. Method according to the preceding claim, **characterized in that** the flux estimation is realigned, in each electrical period, at the time of the transition to opposition, on the value $L_0.I_{phase}$ where $L_0$ is the inductance in opposition and $I_{phase}$ the current measured at the instant of the transition to opposition.

8. Method according to any one of Claims 2 to 7, **characterized in that** the torque is estimated, using the flux estimation, by calculating the difference between the energy transmitted in the magnetization phase and the energy returned in the demagnetization phase.

9. Method according to any one of Claims 1 to 8, **characterized in that** said difference is processed to determine the additional correction angle by a correction law of proportional-integral type.

10. Method according to any one of Claims 2 to 9, **characterized in that**, over an electrical period, a conduction angle set point calculated from the flux estimation calculated in the preceding electrical period is applied to the alternator.

11. Method according to the preceding claim, **characterized in that** the conduction angle set point value in the first period is fixed at a predetermined value, such as the conduction angle value ($\Theta p_{table}$) supplied by an angle table addressed by the set point torque value.

12. Method according to any one of Claims 1 to 11, **characterized in that** said conduction angle set point value ($\Theta p$) is equal to the sum of the additional conduction angle ($\Delta\Theta p$) and a conduction angle value ($\Theta p_{table}$) supplied by an angle table addressed by the set point torque value.

13. Control method according to the preceding claim, **characterized in that** the alternator operates in discontinuous mode or in continuous current mode, said conduction angle value ($\Theta p_{table}$) supplied by the angle table being equal to 180° when operating in continuous current mode.

14. Drive assembly (20) for motor vehicle comprising:

   - an internal combustion engine (20);
   - a variable reluctance alternator (6) to drive the engine;
   - a control unit (10) suitable for applying to the alternator a conduction angle set point ($\Theta p_{table}$) supplied by an angle table addressed by the value of the set point torque, and
   - means (17, 18, 19) for monitoring the torque delivered by the drive assembly to the engine by calculating the difference between a set point torque and an estimation of said torque

   **characterized in that** the control unit is also suitable for determining, from said difference, an additional conduction angle ($\Delta\Theta p$) intended to be applied to the alternator in addition to said conduction angle set point ($\Theta p_{table}$) to render said difference zero.

15. Assembly according to the preceding claim, **characterized in that** it comprises means (17) suitable for calculating an estimation of the flux and means (18) suitable for calculating an estimation of the torque from said estimation of the flux.

16. Assembly according to either of Claims 14 and 15, in which an angle table is addressed by the set point value of the torque to supply said conduction angle set point ($\Theta p_{table}$) in addition to which the additional conduction angle is applied to the alternator.

17. Vehicle, **characterized in that** it comprises an assembly according to any one of Claims 14 to 16.

**Patentansprüche**

1. Verfahren zur Steuerung einer Fahrzeug-Antriebseinheit, bei dem an eine Maschine mit veränderlicher Reluktanz ein Leitungswinkel-Sollwert ($\Theta p_{table}$) angewendet wird, der von einer Winkeltabelle geliefert wird, die vom Wert des Solldrehmoments adressiert wird, **dadurch gekennzeichnet, dass** ausgehend

von der Abweichung ($\varepsilon$) zwischen einem Solldrehmoment, das von der Antriebseinheit geliefert werden soll, und einer Schätzung des Drehmoments ein zusätzlicher Leitungswinkel ($\Delta\Theta p$) bestimmt wird, der dazu bestimmt ist, an die Maschine zusätzlich zum Leitungswinkel-Sollwert ($\Theta p_{table}$) angewendet zu werden, um die Abweichung aufzuheben.

2. Verfahren nach dem vorhergehenden Anspruch, **dadurch gekennzeichnet, dass** das von der Antriebseinheit gelieferte Drehmoment mit Hilfe einer Schätzung des Phasenflusses geschätzt wird.

3. Verfahren nach dem vorhergehenden Anspruch, **dadurch gekennzeichnet, dass** der Fluss durch Integration der an diese Phase während einer elektrischen Periode gemäß $\Phi_{geschätzt} = \int (U_{phase}-R_{phase}\cdot I_{phase})dt$ angelegten Spannung geschätzt wird, wobei $R_{phase}$ den Widerstand der Statorwicklung, $U_{phase}$ die Phasenspannung und $I_{phase}$ den Phasenstrom bezeichnet.

4. Verfahren nach dem vorhergehenden Anspruch, **dadurch gekennzeichnet, dass** eine direkte Messung der Phasenspannung durchgeführt wird.

5. Verfahren nach Anspruch 3, **dadurch gekennzeichnet, dass** die Steuerbefehle und der Phasenstrom verwendet werden, um die Phasenspannung zu bestimmen, wobei diese während der Dauer der Magnetisierung gleich der Speisespannung $V_{DC}$, während der Dauer der Entmagnetisierung gleich $-V_{DC}$, und während der Freilaufphasen oder wenn der Phasenstrom Null ist, gleich Null ist.

6. Verfahren nach einem der Ansprüche 2 bis 5, **dadurch gekennzeichnet, dass** die Schätzung des Flusses periodisch mit Hilfe eines gemessenen Werts des Flusses aktualisiert wird.

7. Verfahren nach dem vorhergehenden Anspruch, **dadurch gekennzeichnet, dass** die Schätzung des Flusses in jeder elektrischen Periode beim Übergang in die Gegenphase auf den Wert $L_0\cdot I_{phase}$ rückgeführt wird, wobei $L_0$ die Induktivität in Gegenphase und $I_{phase}$ der Strom ist, der im Augenblick des Übergangs in die Gegenphase gemessen wird.

8. Verfahren nach einem der Ansprüche 2 bis 7, **dadurch gekennzeichnet, dass** das Drehmoment mit Hilfe der Schätzung des Flusses geschätzt wird, indem die Differenz zwischen der in der Magnetisierungsphase übertragenen Energie und der in der Entmagnetisierungsphase zurückgeschickten Energie berechnet wird.

9. Verfahren nach einem der Ansprüche 1 bis 8, **dadurch gekennzeichnet, dass** die Abweichung verarbeitet wird, um den zusätzlichen Korrekturwinkel durch ein Korrekturgesetz vom proportional-integralen Typ zu bestimmen.

10. Verfahren nach einem der Ansprüche 2 bis 9, **dadurch gekennzeichnet, dass** an den Wechselstromgenerator in einer elektrischen Periode ein Leitungswinkel-Sollwert angewendet wird, der ausgehend von der Schätzung des in der vorhergehenden elektrischen Periode berechneten Flusses berechnet wird.

11. Verfahren nach dem vorhergehenden Anspruch, **dadurch gekennzeichnet, dass** der Leitungswinkel-Sollwert in der ersten Periode auf einem vorbestimmten Wert eingespeist wird, wie der Leitungswinkelwert ($\Theta p_{table}$), der von einer Winkeltabelle geliefert wird, die vom Wert des Solldrehmoments adressiert wird.

12. Verfahren nach einem der Ansprüche 1 bis 11, **dadurch gekennzeichnet, dass** der Leitungswinkel-Sollwert ($\Theta p$) gleich der Summe des zusätzlichen Leitungswinkels ($\Delta\Theta p$) und eines Leitungswinkelwerts ($\Theta p_{table}$) ist, der von einer Winkeltabelle geliefert wird, die vom Wert des Solldrehmoments adressiert wird.

13. Steuerverfahren nach dem vorhergehenden Anspruch, **dadurch gekennzeichnet, dass** der Wechselstromgenerator im pulsierenden Modus oder im Gleichstrommodus arbeitet, wobei der von der Winkeltabelle gelieferte Leitungswinkelwert ($\Theta p_{table}$) beim Betrieb im Gleichstrommodus gleich 180° ist.

14. Antriebseinheit (20) für ein Fahrzeug, die enthält:

   - einen Wärmekraftmotor (20);
   - einen Wechselstromgenerator (6) mit veränderlicher Reluktanz, um den Motor anzutreiben,
   - eine Steuereinheit (10), die geeignet ist, um an den Wechselstromgenerator einen Leitungswinkel-Sollwert ($\Theta p_{table}$) anzuwenden, der von einer Winkeltabelle geliefert wird, die vom Wert des Solldrehmoments adressiert wird, und
   - Einrichtungen (17, 18, 19), um das von der Antriebseinheit an den Motor gelieferte Drehmoment zu prüfen, indem die Abweichung zwischen einem Solldrehmoment und einer Schätzung des Drehmoments berechnet wird,

   **dadurch gekennzeichnet, dass** ausgehend von der Abweichung die Steuereinheit außerdem geeignet ist, einen zusätzlichen Leitungswinkel ($\Delta\Theta p$) zu bestimmen, der dazu bestimmt ist, an den Wechselstromgenerator zusätzlich zum Leitungswinkel-Sollwert ($\Theta p_{table}$) angewendet zu werden, um die Abweichung aufzuheben.

**15.** Einheit nach dem vorhergehenden Anspruch, **dadurch gekennzeichnet, dass** sie Einrichtungen (17), die geeignet sind, um eine Schätzung des Flusses zu berechnen, sowie Einrichtungen (18) enthält, die geeignet sind, um eine Schätzung des Drehmoments ausgehend von der Schätzung des Flusses zu berechnen.

**16.** Einheit nach einem der Ansprüche 14 bis 15, bei der eine Winkeltabelle vom Sollwert des Drehmoments adressiert wird, um den Leitungswinkelsollwert ($\Theta p_{table}$) zu liefern, zusätzlich zu dem der zusätzliche Leitungswinkel an den Wechselstromgenerator angewendet wird.

**17.** Fahrzeug, **dadurch gekennzeichnet, dass** es eine Einheit nach einem der Ansprüche 14 bis 16 aufweist.

Position rotor

Courants phase moteur

12

10

Contrôle
du
système

Onduleur

6

Machine à reluctance
variable

14

Capteur de
position/
vitesse

Tables d'angles

Ilim

ON

ΘPtable

Mesure de vitesse

Consigne de couple

4

8

FIG.1

VDC

D₁

Tension
phase

I₂

I₁

Courant
phase

D₂

Bobinage d'une
phase statorique

FIG.2

**FIG.3** Courant dans une phase moteur et tension appliquée sur celle-ci en fonction de l'angle électrique à basse vitesse.

**FIG.4** Courant dans une phase moteur et tension appliquée sur celle-ci en fonction de l'angle électrique à haute vitesse.

**FIG.5** Effet d'une variation de l'entrefer sur le cycle énergétique.

**FIG.6** Energie transmise lors d'une période électrique à haute vitesse.

FIG.7    Energie transmise lors de la phase de magnétisation.

FIG.8    Energie transmise lors de la démagnétisation.

FIG.9  Schéma de principe de la régulation directe du couple.

FIG.10  Exemples de séquencements du calcul de la régulation de couple.

**FIG.11** Evolution du cycle énergétique sur plusieurs périodes avec régulation de Θp.

**FIG.12** Estimation du flux de phase.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4707650 A